# EUROPEAN PATENT SPECIFICATION

(11) **EP 3 448 077 B1**
(45) Date of publication and mention of the grant of the patent: **24.03.2021**
(21) Application number: 17187548.7
(22) Date of filing: 23.08.2017
(51) Int. Cl.: H04W 12/06, G06F 21/31, G06F 1/16, G06F 3/0346, H04W 4/02

(54) **APPARATUS AND METHOD FOR CONTROLLING ACCESS TO RESTRICTED CONTENT**
VORRICHTUNG UND VERFAHREN ZUR STEUERUNG DES ZUGRIFFS AUF BESCHRÄNKTE INHALTE
APPAREIL ET PROCÉDÉ POUR CONTRÔLER L'ACCÈS À UN CONTENU RESTREINT

(43) Date of publication of application: 27.02.2019
(73) Proprietor: Vestel Elektronik Sanayi ve Ticaret A.S., 45030 Manisa (TR)
(72) Inventor: EGEMEN, Tufan, 45030 Manisa (TR)
(74) Representative: Flint, Adam

(56) References cited:
- KR-A- 20150 056 702
- US-A1- 2011 117 970
- US-A1- 2014 204 017
- US-A1- 2016 018 902

## Description

### Technical Field

The present disclosure relates to an apparatus and method for controlling access to restricted content.

### Background

There is an ever present need for locks on electronic content and devices to restrict the accessibility of private, sensitive or inappropriate content by young children. In one example, a security code, such as a PIN (personal identification number) may be required to access channels broadcasting adult content on a television set. In another example, a parent may place a security code in the form of a PIN or password or pattern lock on a smartphone to prevent young children accessing sensitive material, such as banking applications. Such methods rely on an input by the user of the security code into the device at every instance they wish to use the device. This can be inconvenient for the adult, and requires the adult to remember the security code.

US2014204017A1 discloses a method for controlling access to an electronic device. The electronic device activates a motion sensor to detect movement parameters of a spatial moving operation of the electronic device when a display device of the electronic device awakes from a sleep mode. Once the movement parameters detected by the motion sensor match predetermined reference parameters, the electronic device is unlocked.

US2011117970A1 discloses a mobile device and a method for controlling a touch lock function to be set in a locked or unlocked stated by sensing motions of the mobile device.

KR2015-0056702A discloses an interworking method of a portable device and a digital door lock capable of near field communications. The interworking method comprises: connecting the near field communications between the digital door lock and the portable device; authorizing whether the portable device connected to the digital door lock is a registered portable device or not; transmitting an opening order if a detection value of a movement detection sensor is greater than or equal to a predetermined threshold value in the portable device; and unlocking a locking device if the digital door lock receives a door opening order from the portable device.

### Summary

According to a first aspect disclosed herein, there is provided apparatus for controlling access to restricted content on or via a device, the apparatus comprising:
at least one motion sensor for detecting movement of the apparatus and providing a corresponding output; and
a processor for processing an output of the or each motion sensor;
wherein:
   the motion sensor comprises an altitude sensor, the altitude sensor being arranged to measure movement of the apparatus through a vertical distance and to provide a corresponding output, the processor being arranged to process the output of the altitude sensor such that: (i) if the vertical distance is greater than a threshold value, access to the restricted content is allowed, and (ii) if the vertical distance is less than the threshold value, access to the restricted content is denied;
      and/or:
   the motion sensor comprises an acceleration sensor, the acceleration sensor being arranged to measure an acceleration of the apparatus and to provide a corresponding output, the processor being arranged to process the output of the acceleration sensor such that: (i) if the acceleration is greater than a threshold acceleration value, access to the restricted content is allowed, and (ii) if the acceleration is less than the threshold acceleration value, access to the restricted content is denied.

In an example, the apparatus is incorporated in the device for which access to the restricted content is to be controlled.

In an example, the apparatus is incorporated in a different device from the device for which access to the restricted content is to be controlled.

According to a second aspect disclosed herein, there is provided a method of controlling access to restricted content on or via a device, the method comprising:
detecting movement of an apparatus comprising a processor and a motion sensor, the motion sensor providing an output corresponding to the movement;
wherein:
   the motion sensor comprises an altitude sensor, the altitude sensor measuring movement of the apparatus through a vertical distance and providing a corresponding output, the processor processing the output of the altitude sensor such that: (i) if the vertical distance is greater than a threshold value, access to the restricted content is allowed, and (ii) if the vertical distance is less than the threshold value, access to the restricted content is denied;
      and/or:
   the motion sensor comprises an acceleration sensor, the acceleration sensor measuring an acceleration of the apparatus and providing a corresponding output, the processor processing the output of the acceleration sensor such that: (i) if the acceleration is greater than a threshold acceleration value, access to the restricted content is allowed, and (ii) if the acceleration is less than the threshold acceleration value, access to the restricted content is denied.

### Brief Description of the Drawings

To assist understanding of the present disclosure and to show how embodiments may be put into effect, reference is made by way of example to the accompanying drawings in which:
Figure 1 shows schematically a first example of a device;
Figure 2 shows schematically a second example of a device;
Figure 3 shows schematically an example environment in which a user attempts to access restricted content;
Figure 4 shows schematically the first environment in which another user attempts to access restricted content;
Figure 5 shows schematically a second example environment in which a user attempts to access restricted content; and
Figure 6 shows schematically the second environment in which another user attempts to access restricted content.

### Detailed Description

As mentioned previously, known methods of prohibiting access to electronic content by young children employ cumbersome security measures. For example, a security code, such as a password or PIN or security pattern or the like, may be required every time the device or particular content on the device or accessible via the device is to be accessed by the intended user. Such security codes can also easily be observed and copied by young children, thereby requiring the intended user of the device to change the security code frequently to keep their content safe and to keep adult content from young children. In addition, this also requires the adult to remember the security code for the or each device or the specific content.

In examples disclosed herein, there is provided an arrangement comprising a motion sensor. The motion sensor detects movement of the arrangement and provides a corresponding output. A processor processes an output of the motion sensor. If the processed output of the motion sensor indicates that movement of the device is above a threshold motion value, access to the restricted content is allowed. If the processed output of the motion sensor indicates that movement of the device is below a threshold motion value, access to the restricted content is denied.

A number of different types of motion sensor are used to detection movement of devices in the art. For example, a device may be arranged to emit IR (infra-red) radiation to an IR sensor. When moved, the IR sensor may fall out of the range of the IR emitter of the device. More commonly, electronic devices use accelerometers, gyroscopes, magnetometers and other such sensors to detect movement of the device. In most modern electronic devices, these sensors are provided in the form of electronic integrated circuits or chips. Additionally, a sensor chip may be arranged to sense more than one type of motion.

Detecting motion of a device can be used to control access to a functionality of the device itself. For example, a smartphone or tablet computer or the like, upon detecting being moved as described herein, may wake and allow access to certain applications running on the device. In another example, detecting the motion of one device can be used to control access to a functionality of another device. For example, the first device may be a remote controller for a television, a DVD player, a set-top box, a radio, etc. If a young child attempts to play a DVD above a U rating or access adult TV or radio channels, the device may be arranged to detect the motion of the remote controller, for example by the methods described below. If the remote controller detects that user is a child, it may prohibit the DVD player from playing a DVD with a rating of PG, 12, etc., or selection of adult channels on the television, etc.

The above mentioned threshold motion value is a minimum value of motion expected when the device is moved by an adult. Access to a functionality or application of the device is dependent on whether the sensed motion meets or exceeds the threshold, thereby granting access only if an adult is determined as having moved the device.

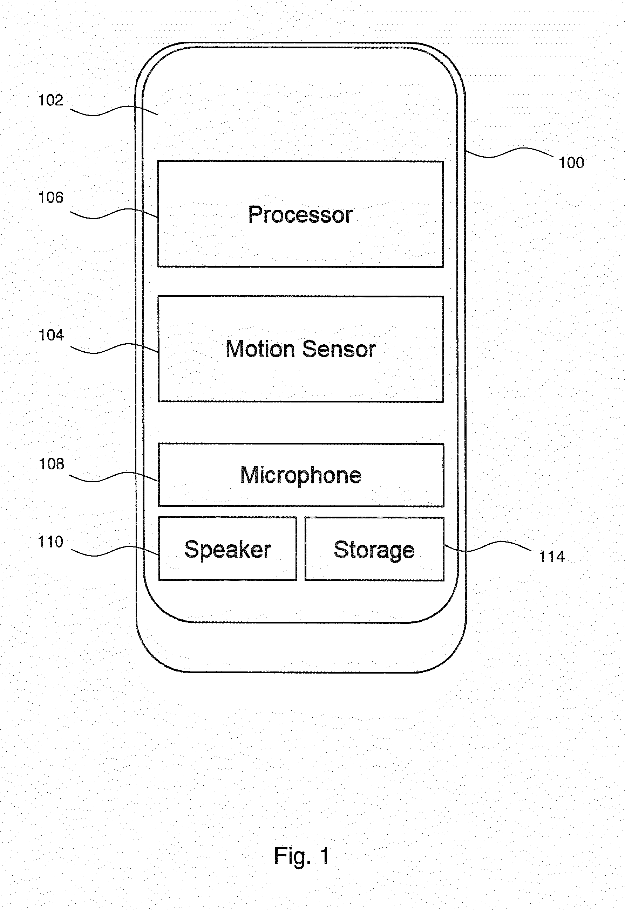

Figure 1 shows schematically a first example of a device 100. In this example, the device 100 has a functionality for which access is to be controlled, including, in particular, access by children. In this example, the device is a smartphone 100. Other corresponding examples include tablet computers and other portable devices which may have or which permit access to content which may be displayed on the device 100 and for which access is to be controlled. The functionality may be for example access to adult content, access to a user's bank account, etc., with the content such as the adult content or account details, etc. being displayable on the device 100.

The smartphone 100 has a display area 102. Content may be displayed at the display area 102. Access to the content may be provided by some functionality of the smartphone 100. This may be for example some login screen or the like which allows the user to access the content and which may be provided by some application installed on the smartphone 100 or via a browser or the like on the smartphone 100. Access to that content may be controlled by controlling access to that functionality. The smartphone 100 comprises a motion sensor 104 for detecting movement of the smartphone 100 and a processor 106 for processing the movement data acquired by the motion sensor 104. The smartphone 100 in this example is shown comprising a microphone 108 and a speaker 110. The functionality may additionally or alternatively be to activate a command given through the microphone 108 or an audio output obtained through the speaker 110. The smartphone also comprises a data storage 114.

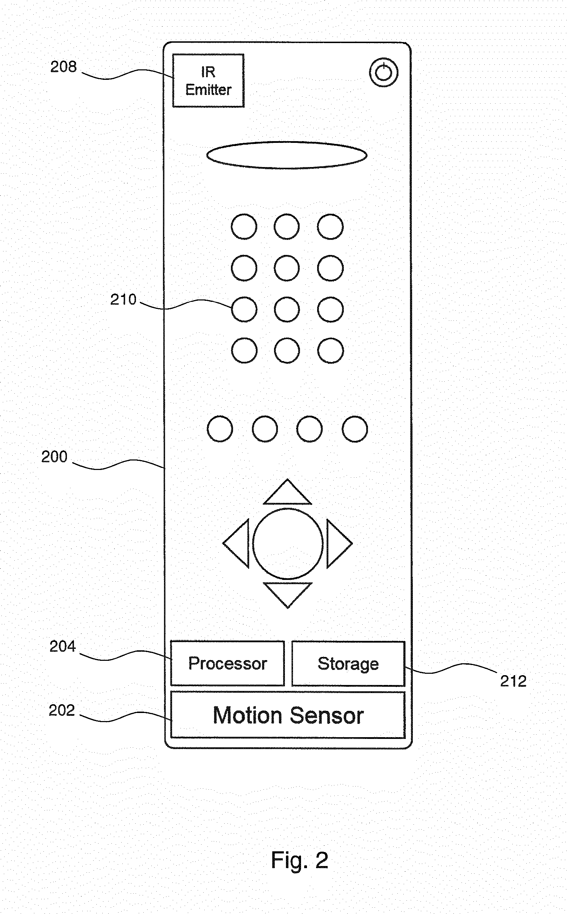

Figure 2 shows schematically a second example of a device 200. In this example, the device 200 is used to access another device that has a functionality for which access is to be controlled, including in particular access by children. Such other device may be for example a television or DVD player or set-top box or radio, etc., with the device 200 being for example a remote controller 200 for the other device. As a specific example, DVD players are known that are able to detect an age rating associated with a DVD. As another example, certain channels receivable by a television may contain adult content.

In this example, the remote controller 200 comprises a motion sensor 202 for detecting movement. The remote controller 200 also comprises a processor 204, the processor 204 being arranged to process the output of the motion sensor 202. The remote controller 200 also comprise a data storage 206, a wireless transmitter 208, such as an IR emitter 208 or the like, for sending commands to another device, such as a television set, and controls 210 such as keys or buttons for controlling the other device.

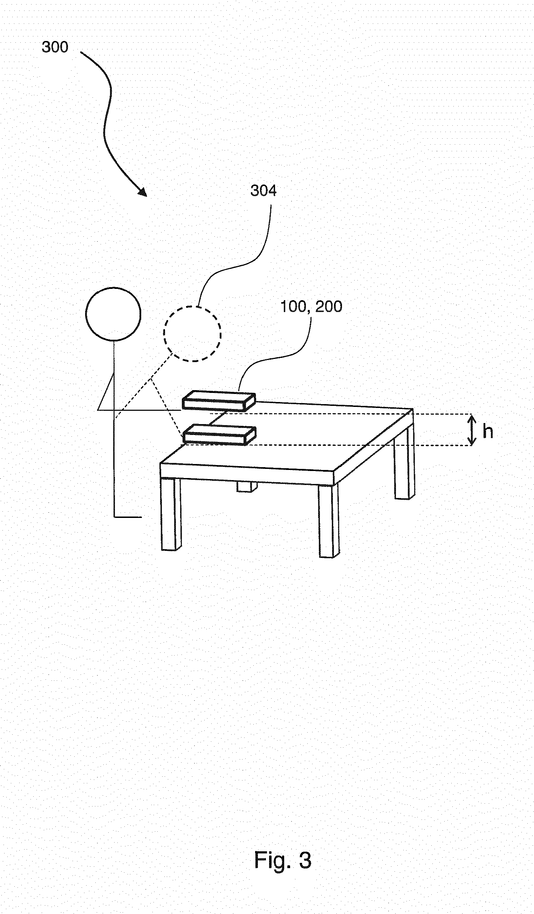

Figure 3 schematically shows an example environment 300 in which a device 100, 200 is left unattended. Child user 302 is shown picking up the device 100, 200. The device 100, 200 comprises a motion sensor. In this example, the motion sensor is an altitude sensor which is arranged to detect the vertical distance h through which the device 100, 200 is moved. The device 100, 200 is arranged such that the user is not granted access to a functionality of the device 100, 200 if the device 100, 200 has not been moved through a minimum vertical distance ho. The minimum vertical distance ho may be pre-set and may be adjusted by for example the adult user. The change in altitude 306 of the device 100, 200 will be very small for a child, and will not reach the threshold minimum vertical distance ho. In another example, the altitude of the device may change negatively, if for example the device is located at a height higher than the child and the child reaches up and brings the device down. Therefore, when the child user 302 picks up the device 100, 200 and brings the device down, they will not be able to access the functionality of the device. In one example, this may prohibit the child user from accessing a particular channel of a television which is controlled by the device 100, 200.

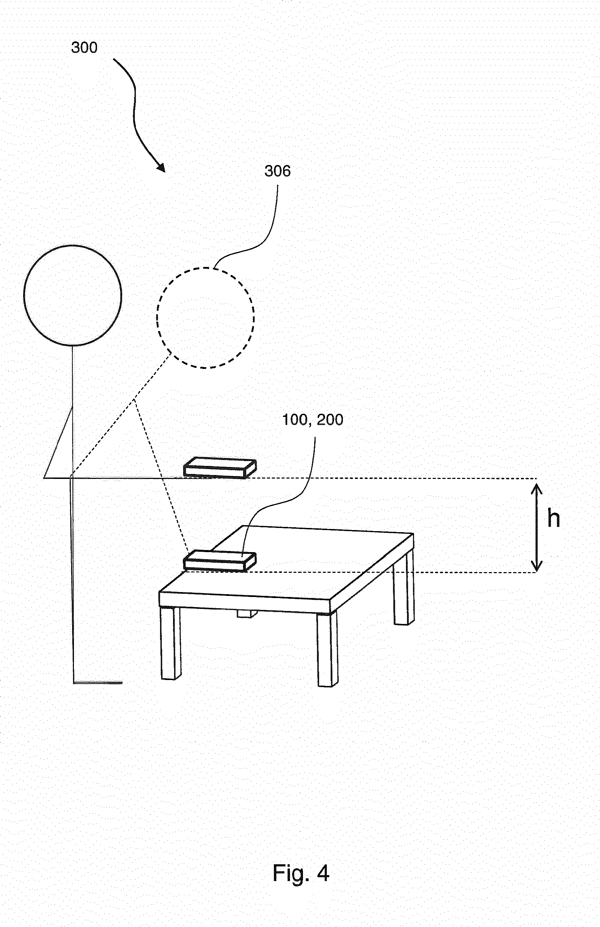

Figure 4 schematically shows the example environment 300 in the case that the device 100, 200 is picked up by an adult user 306. The change in altitude h of the device 100, 200 will be large enough to exceed the aforementioned minimum vertical distance h₀. Therefore when the adult user 306 picks up the device 100, 200, they will be able to access the functionality of the device. In one example, this may permit access to certain functionality that is intended to be accessed by adults only.

In an alternative embodiment, the device 100, 200 may also comprise a motion sensor in the form an accelerometer or acceleration sensor. An acceleration sensor of the device will detect the acceleration of the device during movement. Additionally, the acceleration sensor may be arranged to detect the acceleration only when a significant motion of the device is detected, or, equivalently, the processor of the device only processes the output of the acceleration sensor when a significant motion of the device is detected, i.e. the acceleration is above some threshold. This avoids activating the device when it is, for example, moving around in someone's pocket or bag, etc. Generally, an adult user will move the device with a greater acceleration than a child user.

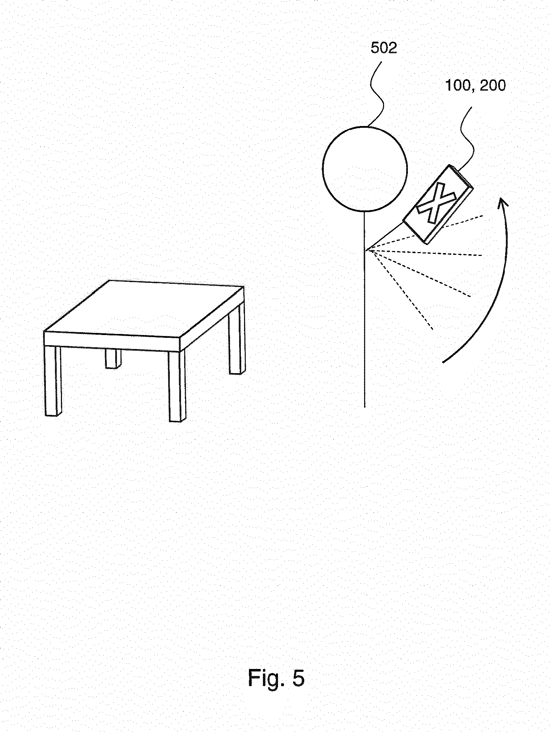

Referring to Figure 5, a device 100, 200 is picked up by a child user 502. The child user 502 raises the device 100, 200 towards their face slowly. An acceleration sensor of the device 100, 200 detects the acceleration of the motion of the device 100, 200. The device 100, 200 determines the acceleration to be lower than a threshold acceleration value required to allow access to a functionality of the device 100, 200. Therefore, access to the restricted functionality of the device 100, 200 remains locked.

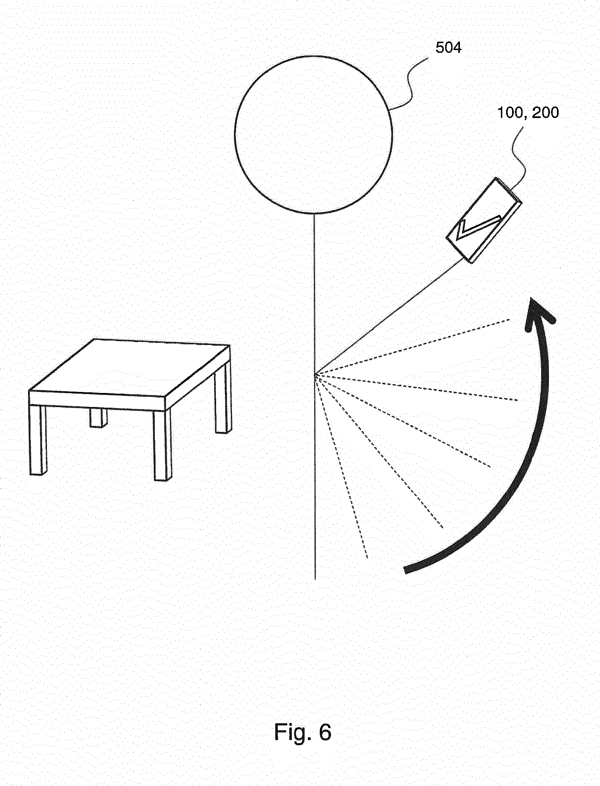

Referring to Figure 6, the device 100, 200 is now shown as being moved by an adult user 504. The acceleration sensor of the device 100, 200 detects the acceleration of the motion. The processor of the device 100, 200 determines the acceleration to be higher than the threshold acceleration value associated with the device 100, 200. Therefore, the device 100, 200 allows the adult user 504 access to the functionality of the device 100, 200.

In an embodiment, as described previously the motion sensor of a device may comprise an altitude sensor. A threshold vertical distance may need to be achieved for the device to allow a user access to a functionality. Additionally or alternatively, a threshold acceleration of the movement of the device may need to be achieved for the device to allow a user access to a functionality. The acceleration may be measured by an acceleration sensor. Additionally or alternatively, the device may comprise at least one other motion sensor. The sensor features described herein may be used alone to determine whether movement thresholds for the device have been exceeded so as to permit access to the restricted functionality of the device. In other examples, the device may require that thresholds for more than one type of motion are exceeded before permitting access to the restricted functionality of the device. For example, access may only be permitted if the acceleration of the device exceeds a threshold and the device is moved through a vertical distance that exceeds a threshold. Additionally, the device may comprise at least one other authentication or security measure. For example, this may be a security code, such as a pattern or password.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for controlling access to restricted content on or via a device (100, 200), the apparatus comprising:
at least one motion sensor (104, 202) configured to detect movement of the apparatus and to provide a corresponding output; and
a processor configured to process an output of the or each motion sensor (104, 202);
wherein:
the motion sensor (104, 202) comprises an altitude sensor, the altitude sensor being arranged to measure movement of the apparatus through a vertical distance and to provide a corresponding output, the processor being arranged to process the output of the altitude sensor such that: (i) if the vertical distance is greater than a threshold value, access to the restricted content is allowed, and (ii) if the vertical distance is less than the threshold value, access to the restricted content is denied;
and/or:
the motion sensor (104, 202) comprises an acceleration sensor, the acceleration sensor being arranged to measure an acceleration of the apparatus and to provide a corresponding output, the processor being arranged to process the output of the acceleration sensor such that: (i) if the acceleration is greater than a threshold acceleration value, access to the restricted content is allowed, and (ii) if the acceleration is less than the threshold acceleration value, access to the restricted content is denied.

2. Apparatus according to claim 1, wherein the apparatus is incorporated in the device (100, 200) for which access to the restricted content is to be controlled.

3. Apparatus according to claim 1, wherein the apparatus is incorporated in a different device from the device (100, 200) for which access to the restricted content is to be controlled.

4. A method of controlling access to restricted content on or via a device (100, 200), the method comprising:
detecting movement of an apparatus comprising a processor and a motion sensor (104, 202), the motion sensor (104, 202) providing an output corresponding to the movement;
wherein:
the motion sensor (104, 202) comprises an altitude sensor, the altitude sensor measuring movement of the apparatus through a vertical distance and providing a corresponding output, the processor processing the output of the altitude sensor such that: (i) if the vertical distance is greater than a threshold value, access to the restricted content is allowed, and (ii) if the vertical distance is less than the threshold value, access to the restricted content is denied;
and/or:
the motion sensor (104, 202) comprises an acceleration sensor, the acceleration sensor measuring an acceleration of the apparatus and providing a corresponding output, the processor processing the output of the acceleration sensor such that: (i) if the acceleration is greater than a threshold acceleration value, access to the restricted content is allowed, and (ii) if the acceleration is less than the threshold acceleration value, access to the restricted content is denied.

5. A method according to claim 4, wherein the apparatus is incorporated in the device (100, 200) for which access to the restricted content is to be controlled.

6. A method according to claim 4, wherein the apparatus is incorporated in a different device from the device (100, 200) for which access to the restricted content is to be controlled.

## Patentansprüche

1. Vorrichtung zum Kontrollieren des Zugangs auf einen eingeschränkten Inhalt auf einem oder über ein Gerät (100, 200), wobei die Vorrichtung aufweist:
wenigstens einen Bewegungssensor (104, 202), der ausgestaltet ist, um eine Bewegung der Vorrichtung zu erfassen und eine entsprechende Ausgabe zu liefern; und
einen Prozessor, der konfiguriert ist, um eine Ausgabe des oder jedes Bewegungssensors (104, 202) zu verarbeiten;
wobei:
der Bewegungssensor (104, 202) einen Höhensensor aufweist, wobei der Höhensensor eingerichtet ist, um die Bewegung der Vorrichtung durch einen vertikalen Abstand zu messen und eine entsprechende Ausgabe zu liefern, wobei der Prozessor eingerichtet ist, um die Ausgabe des Höhensensors so zu verarbeiten, dass: (i) wenn der vertikale Abstand größer als ein Schwellenwert ist, der Zugang auf den eingeschränkten Inhalt zugelassen wird, und (ii) wenn der vertikale Abstand kleiner als der Schwellenwert ist, der Zugang auf den eingeschränkten Inhalt verweigert wird;
und/oder
der Bewegungssensor (104, 202) einen Beschleunigungssensor aufweist, wobei der Beschleunigungssensor eingerichtet ist, um eine Beschleunigung der Vorrichtung zu messen und eine entsprechende Ausgabe zu liefern, wobei der Prozessor eingerichtet ist, um die Ausgabe des Beschleunigungssensors so zu verarbeiten, dass: (i) wenn die Beschleunigung größer als ein Schwellenbeschleunigungswert ist, der Zugang auf den eingeschränkten Inhalt zugelassen wird, und (ii) wenn die Beschleunigung kleiner als der Schwellenbeschleunigungswert ist, der Zugang auf den eingeschränkten Inhalt verweigert wird.

2. Vorrichtung nach Anspruch 1, wobei die Vorrichtung in das Gerät (100, 200) integriert ist, für das der Zugang auf den eingeschränkten Inhalt kontrolliert werden soll.

3. Vorrichtung nach Anspruch 1, wobei die Vorrichtung in ein anderes Gerät als das Gerät (100, 200), für das der Zugang auf den eingeschränkten Inhalt kontrolliert werden soll, integriert ist.

4. Verfahren zum Kontrollieren des Zugangs auf einen eingeschränkten Inhalt auf einem oder über ein Gerät (100, 200), wobei das Verfahren aufweist:
Erfassen einer Bewegung einer Vorrichtung, die einen Prozessor und einen Bewegungssensor (104, 202) aufweist, wobei der Bewegungssensor (104, 202) eine Ausgabe entsprechend der Bewegung liefert;
wobei:
der Bewegungssensor (104, 202) einen Höhensensor aufweist, wobei der Höhensensor die Bewegung der Vorrichtung durch einen vertikalen Abstand misst und eine entsprechende Ausgabe liefert, wobei der Prozessor die Ausgabe des Höhensensors so verarbeitet, dass: (i) wenn der vertikale Abstand größer als ein Schwellenwert ist, der Zugang auf den eingeschränkten Inhalt zugelassen wird, und (ii) wenn der vertikale Abstand kleiner als der Schwellenwert ist, der Zugang auf den eingeschränkten Inhalt verweigert wird;
und/oder:
der Bewegungssensor (104, 202) einen Beschleunigungssensor aufweist, wobei der Beschleunigungssensor eine Beschleunigung der Vorrichtung misst und eine entsprechende Ausgabe liefert, wobei der Prozessor die Ausgabe des Beschleunigungssensors so verarbeitet, dass: (i) wenn die Beschleunigung größer als ein Schwellenbeschleunigungswert ist, der Zugang auf den eingeschränkten Inhalt zugelassen wird, und (ii) wenn die Beschleunigung kleiner als der Schwellenbeschleunigungswert ist, der Zugang auf den eingeschränkten Inhalt verweigert wird.

5. Verfahren nach Anspruch 4, bei welchem die Vorrichtung in das Gerät (100, 200) integriert ist, für das der Zugang auf den eingeschränkten Inhalt kontrolliert werden soll.

6. Verfahren nach Anspruch 4, bei welchem die Vorrichtung in ein anderes Gerät als das Gerät (100, 200), für das der Zugang auf den eingeschränkten Inhalt kontrolliert werden soll, integriert ist.

## Revendications

1. Appareil pour contrôler l'accès à un contenu restreint sur ou via un dispositif (100, 200), l'appareil comprenant :
au moins un capteur de mouvement (104, 202) qui est configuré pour détecter un mouvement de l'appareil et pour fournir une sortie correspondante ; et
un processeur qui est configuré pour traiter une sortie du ou de chaque capteur de mouvement (104, 202) ;
dans lequel :
le capteur de mouvement (104, 202) comprend un capteur d'altitude, le capteur d'altitude étant agencé pour mesurer un mouvement de l'appareil sur une distance verticale et pour fournir une sortie correspondante, le processeur étant agencé pour traiter la sortie du capteur d'altitude de telle sorte que : (i) si la distance verticale est supérieure à une valeur de seuil, l'accès au contenu restreint est autorisé, et (ii) si la distance verticale est inférieure à la valeur de seuil, l'accès au contenu restreint est refusé ;
et / ou :
le capteur de mouvement (104, 202) comprend un capteur d'accélération, le capteur d'accélération étant agencé pour mesurer une accélération de l'appareil et pour fournir une sortie correspondante, le processeur étant agencé pour traiter la sortie du capteur d'accélération de telle sorte que : (i) si l'accélération est supérieure à une valeur de seuil d'accélération, l'accès au contenu restreint est autorisé, et (ii) si l'accélération est inférieure à la valeur de seuil d'accélération, l'accès au contenu restreint est refusé.

2. Appareil selon la revendication 1, dans lequel l'appareil est incorporé dans le dispositif (100, 200) pour lequel l'accès au contenu restreint doit être contrôlé.

3. Appareil selon la revendication 1, dans lequel l'appareil est incorporé dans un dispositif différent du dispositif (100, 200) pour lequel l'accès au contenu restreint doit être contrôlé.

4. Procédé de contrôle d'accès à un contenu restreint sur ou via un dispositif (100, 200), le procédé consistant à :
détecter un mouvement d'un appareil qui comprend un processeur et un capteur de mouvement (104, 202), le capteur de mouvement (104, 202) fournissant une sortie qui correspond au mouvement ;
dans lequel :
le capteur de mouvement (104, 202) comprend un capteur d'altitude, le capteur d'altitude mesurant un mouvement de l'appareil sur une distance verticale et fournissant une sortie correspondante, le processeur traitant la sortie du capteur d'altitude de telle sorte que : (i) si la distance verticale est supérieure à une valeur de seuil, l'accès au contenu restreint est autorisé, et (ii) si la distance verticale est inférieure à la valeur de seuil, l'accès au contenu restreint est refusé ;
et / ou :
le capteur de mouvement (104, 202) comprend un capteur d'accélération, le capteur d'accélération mesurant une accélération de l'appareil et fournissant une sortie correspondante, le processeur traitant la sortie du capteur d'accélération de telle sorte que : (i) si l'accélération est supérieure à une valeur de seuil d'accélération, l'accès au contenu restreint est autorisé, et (ii) si l'accélération est inférieure à la valeur de seuil d'accélération, l'accès au contenu restreint est refusé.

5. Procédé selon la revendication 4, dans lequel l'appareil est incorporé dans le dispositif (100, 200) pour lequel l'accès au contenu restreint doit être contrôlé.

6. Procédé selon la revendication 4, dans lequel l'appareil est incorporé dans un dispositif différent du dispositif (100, 200) pour lequel l'accès au contenu restreint doit être contrôlé.
